# EUROPÄISCHE PATENTANMELDUNG

(11) **EP 4 617 932 A1**
(43) Veröffentlichungstag der Anmeldung: **17.09.2025**
(21) Anmeldenummer: 25162985.3
(22) Anmeldetag: 11.03.2025
(51) Int. Cl.: G06F 21/62, H04L 9/00, H04L 9/40

(54) **KOMMUNIKATION MIT MEHREREN BENUTZERTERMINALS UND ANONYMISIERTEM FLUSS VERTRAULICHER DATEN**

(30) Priorität: 13.03.2024 DE 102024107123
(71) Anmelder: PONTON GmbH, 22301 Hamburg (DE)
(72) Erfinder: Merz, Michael, 20249 Hamburg (DE)
(74) Vertreter: Patentanwaltskanzlei Hinkelmann

(57) **Zusammenfassung**

Die Erfindung betrifft ein Kommunikationssystem mit einem Zentralterminal 1 und mehreren Benutzerterminals 2, 3, 4, welches eingerichtet ist, um einen anonymisierten Fluss vertraulicher Datensätze 6, 9 zwischen dem Zentralterminal 1 und den Benutzerterminals 2, 3, 4 zu betreiben, wobei erste vertrauliche Datensätze 6 mittels erster Nachrichten 5 jeweils von einem Benutzerterminal 2, 3, 4 zu dem Zentralterminal 1 gesendet und nach Empfangen einer ersten Nachricht 5 durch das Zentralterminal 1 mittels der ersten Nachricht 5 entsprechender zweiten Nachrichten 8 gleichzeitig an alle Benutzerterminals 2, 3, 4 gesendet werden, wobei jede zweite Nachricht 8 einen den ersten vertraulichen Datensatz 6 gleichenden zweiten vertraulichen Datensatz 9 enthält und wobei jede zwei Benutzerterminals 2, 3, 4 über ein Paar von Schlüsseln 11, 12, 13, 14, 15, 16 umfassend einen ersten Schlüssel 12, 13, 14 zum Verschlüsseln der ersten vertraulichen Datensätze 6 in jeweiligen ersten Nachrichten 5 und einen zweiten Schlüssel 11, 15, 16 zum Entschlüsseln zweiter vertraulicher Datensätze 9 aus jeweiligen zweiten Nachrichten 8 verfügen und jedes Paar von Schlüsseln 11, 12, 13, 14, 15, 16 einen Fluss vertraulicher Datensätze 6, 9 von einem Benutzerterminal 2, 3, 4 zu genau einem anderen Benutzerterminal 2, 3, 4 ermöglicht. Dabei ist jedes Benutzerterminal 2, 3, 4 eingerichtet, um in jeder ersten Nachricht 5 den verschlüsselten ersten vertraulichen Datensatz 6 mit einem nicht verschlüsselten ersten offenen Datensatz 7 zu kombinieren, und ist das Zentralterminal 1 eingerichtet, um nach Empfangen einer ersten Nachricht 5 eine der ersten Nachricht 5 entsprechende zweite Nachricht 8, welche den zweiten vertraulichen Datensatz 9 und einen dem ersten offenen Datensatz 7 gleichenden zweiten offenen Datensatz 10 enthält, an alle Benutzerterminals 2, 3, 4 zu senden. Die Erfindung betrifft auch ein entsprechendes Verfahren, ein entsprechendes Computerprogrammprodukt und eine entsprechende Kombination mit zumindest einem computerlesbaren Datenträger.

## Beschreibung

Die Erfindung betrifft ein Kommunikationssystem mit einem Zentralterminal und mehreren Benutzerterminals, welches eingerichtet ist, um einen anonymisierten Fluss erster vertraulicher Datensätze zwischen dem Zentralterminal und den Benutzerterminals zu betreiben, wobei die vertraulichen Datensätze mittels erster Nachrichten von einem Benutzerterminal zu dem Zentralterminal gesendet und nach Empfangen einer ersten Nachricht durch das Zentralterminal mittels der ersten Nachricht entsprechender zweiter Nachrichten gleichzeitig an alle Benutzerterminals gesendet werden, wobei jede zweite Nachricht einen den ersten vertraulichen Datensatz gleichenden zweiten vertraulichen Datensatz enthält und wobei jede zwei Benutzerterminals über ein Paar von Schlüsseln umfassend einen ersten Schlüssel zum Verschlüsseln der ersten vertraulichen Datensätze in jeweiligen ersten Nachrichten und einen zweiten Schlüssel zum Entschlüsseln zweiter vertraulicher Datensätze aus jeweiligen zweiten Nachrichten verfügen und jedes Paar von Schlüsseln einen Fluss vertraulicher Datensätze von einem Benutzerterminal zu genau einem anderen Benutzerterminal ermöglicht.

Die Erfindung betrifft auch ein Verfahren zur Kommunikation zwischen einem Zentralterminal und mehreren Benutzerterminals, wobei ein anonymisierter Fluss erster vertraulicher Datensätze zwischen dem Zentralterminal und den Benutzerterminals betrieben wird, wobei die vertraulichen Datensätze mittels erster Nachrichten von einem Benutzerterminal zu dem Zentralterminal gesendet und nach Empfangen einer ersten Nachricht durch das Zentralterminal mittels der ersten Nachricht entsprechender zweiter Nachrichten gleichzeitig an alle Benutzerterminals gesendet werden, wobei jede zweite Nachricht einen den ersten vertraulichen Datensatz gleichenden zweiten vertraulichen Datensatz enthält und wobei jede zwei Benutzerterminals über ein Paar von Schlüsseln umfassend einen ersten Schlüssel zum Verschlüsseln der jeweiligen ersten vertraulichen Datensätze in den ersten Nachrichten und einen zweiten Schlüssel zum Entschlüsseln der jeweiligen zweiten vertraulichen Datensätze in den zweiten Nachrichten verfügen und jedes Paar von Schlüsseln einen Fluss vertraulicher Datensätze von einem Benutzerterminal zu genau einem anderen Benutzerterminal ermöglicht.

Die Erfindung betrifft weiterhin ein Computerprogrammprodukt umfassend ein Zentralmodul von ersten Befehlen und ein Benutzermodul von zweiten Befehlen, wobei die ersten Befehle und die zweiten Befehle bei Ausführung auf entsprechenden Computern diese veranlassen, ein Verfahren gemäß der Erfindung auszuführen, und eine Kombination umfassend zumindest einen computerlesbaren Datenträger, auf welcher Kombination das Computerprogrammprodukt gemäß der Erfindung gespeichert ist.

In einem Kommunikationssystem der oben definierten Gattung arbeitet das Zentralterminal als Vermittler für Nachrichten mit Datensätzen, welche von einem Benutzerterminal für ein anderes Benutzerterminal bestimmt sind, indem diese gegebenenfalls mit dem entsprechenden ersten Schlüssel verschlüsselt als erste Nachrichten an das Zentralterminal gesendet und von dem Zentralterminal als zweite Nachrichten an alle Benutzerterminals gesendet werden, wobei nur das entsprechend vorgesehene andere Benutzerterminal über den zweiten Schlüssel verfügt, um die zweite Nachricht entschlüsseln zu können. Selbstverständlich kann das Zentralterminal für sich selbst bestimmte Nachrichten von jedem Benutzerterminal empfangen und sonstige Nachrichten, die für alle Benutzerterminals bestimmt sind, an diese senden.

Das Dokument EP 1 628 184 A1 offenbart ein Verfahren zur Durchführung eines netzwerkgestützten Kunden-Geschäftsprozesses und ein Verfahren zur Bereitstellung eines Zugangs zu einem zugangsgeschützten Bereich eines Severs, wobei jeweils ein Zugang zu dem zugangsgeschützten Bereich in dem Server durch elektronisches Aktivieren einer Zugangsberechtigung erfolgt.

Das Dokument DE 10 2011 079 109 A1 betrifft ein Verfahren und eine Vorrichtung zur sicheren Datenübertragung zwischen einem beliebigen Absender und einem beliebigen Adressaten, die über ein Computernetzwerk miteinander verbunden sind, wobei das Computernetzwerk Parteien aufweist, welche disjunkte Teilmengen eigenständig adressierbarer Computersysteme im Computernetzwerk sind.

Die Dokumente WO 2018/076013 A1 und US 2020/0162240 A1 betreffen jeweils ein System und ein Verfahren zur vollständig anonymisierten Kommunikation zwischen Teilnehmern eines Kommunikationsnetzwerks unter Nutzung eines verteilten Anonymitätsprotokolls.

Das Dokument CN 115 378 724 A betrifft ein Kommunikationsnetzwerk und das Aushandeln eines Protokolls zur Wahrung von Vertraulichkeit durch dessen Teilnehmer.

Mittels eines Kommunikationssystems der eingangs definierten Gattung können Benutzer über entsprechende Benutzerterminals miteinander verbunden sein, um vielfältige Datensätze untereinander auszutauschen und dabei Transaktionen miteinander zu vereinbaren, wobei bei einer Transaktion einen Austausch nicht nur bestimmter Datensätze, sondern auch Geld und materieller oder immaterieller Handelsgüter betrifft. Es mag gewünscht sein, dass ein solcher Austausch zwischen den beteiligten Benutzern vertraulich bleibt, wobei die Vertraulichkeit sowohl die ausgetauschten Datensätze auch die Identitäten der Benutzer, die den Austausch vorgenommen haben, betrifft, und weder ein anderer Benutzer noch das Zentralterminal Zugriff auf die ausgetauschten Datensätze und die Identitäten der Benutzer hat. Dies muss aber nicht immer der Fall sein. Insbesondere kann es gewünscht sein, dass zu einem Datenaustausch gehörige Datensätze sowohl vertrauliche Datensätze umfassen, die nur die beteiligten Benutzer kennen sollen, als auch nicht vertrauliche offene Datensätze, die insbesondere dem Zentralterminal zur Kenntnisnahme verfügbar sein sollen. Dazu sind insbesondere folgende Konfigurationen denkbar:
1. Das Kommunikationssystem dient einer medizinischen Studie, in welcher medizinische Fachpersonen und Patienten unter Austausch entsprechender medizinischer Datensätze im Kombination mit persönlichen Datensätzen untereinander kommunizieren, wobei die medizinischen Datensätze allen medizinischen Fachpersonen im Rahmen der Studie zur Verfügung stehen sollen, die mit den medizinischen Daten jeweils verbundenen persönlichen Datensätze aber nur jeweils einer einzigen dieser Fachpersonen, nämlich derjenigen, die den entsprechenden Patienten direkt betreut. Zum Schutz solcher persönlichen Datensätze sollen auch weder das Zentralterminal noch am Austausch der Datensätze unbeteiligte Fachpersonen erkennen können, wer jeweils mit wem kommuniziert, es soll hinsichtlich persönlicher Datensätze also eine vollständige Vertraulichkeit gegeben sein.
2. Das Kommunikationssystem gehört einer Waren- oder Dienstleistungsbörse zu, wobei das Zentralterminal von der Waren- oder Dienstleistungsbörse selbst betrieben wird und die Benutzer das Kommunikationssystem zur Anbahnung und Durchführung von Transaktionen an der Waren- oder Dienstleistungsbörse nutzen, wobei bestimmte Datensätze einer Transaktion, zum Beispiel Angebotspreise für Waren oder Dienstleistungen oder bestimmte technische Daten der von einer Transaktion betroffenen Waren oder Dienstleistungen, allen Benutzern und dem Zentralterminal, oder einer Teilmenge dieser, bekannt werden sollen, jedoch andere Datensätze einer Transaktion, zum Beispiel Volumina der betroffenen Waren oder Dienstleistungen und die Identitäten der an der Transaktion beteiligten Benutzer, weder dem Zentralterminal noch einem nicht an der Transaktion beteiligten Benutzer.
3. Eine Variante des Falles 2, bei der es um die Bedienung von Interessen der Beteiligten an bestimmten technischen Daten der von einer Transaktion betroffenen Waren oder Dienstleistungen geht, die nicht unmittelbar aus den mit der Transaktion verbundenen Datensätzen erkennbar sind, sondern die von einer unabhängigen dritten Person aus solchen verbundenen Datensätzen erst erarbeitet werden müssen, wobei diese dritte Person von dem Zentralterminal oder einem dazu bestimmten Benutzerterminal die verbundenen Datensätze erhält, um die gewünschten technischen Daten zu bestimmen und an das Zentralterminal oder das bestimmte Benutzerterminal zwecks Verbreitung im Netzwerk zu senden.

Im einem Kommunikationssystem und einem Verfahren der jeweils eingangs definierten Gattung erfolgt die Kommunikation durch die Verschlüsselung der ersten Nachrichten immer nur zwischen zwei Benutzerterminals, ohne dass die Datensätze in einer ersten Nachricht von einem dritten Benutzerterminal gelesen werden können. Zur Verbreitung nicht vertraulicher, offener Datensätze an mehr als ein Benutzerterminal sind deshalb zusätzliche Kommunikationsvorgänge erforderlich, die die Handhabung des Kommunikationssystems oder des Verfahrens unnötig aufwändig machen.

Es besteht somit ein Bedürfnis nach einem Kommunikationssystem und einem Verfahren der der jeweils eingangs definierten Gattung, die in der Kommunikation mit teils vertraulichen, teils offenen Datensätzen zu einer besseren Handhabung geeignet sind und die eine vollständige Vertraulichkeit unter Ausschluss einer Analyse des Datenflusses zwischen den Benutzern ermöglichen. Auch besteht ein Bedürfnis nach einem entsprechenden Computerprogrammprodukt und einem entsprechenden computerlesbaren Datenträger.

Die Erfindung geht deshalb von der Aufgabe aus, ein Kommunikationssystem und ein Verfahren der jeweils eingangs definierten Gattung sowie ein entsprechendes Computerprogrammprodukt und einen entsprechenden computerlesbaren Datenträger bereitzustellen, um in der Kommunikation mit teils vertraulichen, teils offenen Datensätzen eine bessere Handhabung zu ermöglichen und eine vollständige Vertraulichkeit unter Ausschluss einer Analyse des Datenflusses zwischen den Benutzern zu ermöglichen.

Zur Lösung dieser Aufgabe werden gemäß der Erfindung ein Kommunikationssystem, ein Verfahren, ein Computerprogrammprodukt und eine Kombination umfassend zumindest einen computerlesbaren Datenträger gemäß entsprechendem unabhängigem Patentanspruch angegeben.

Bevorzugte Ausgestaltungen der Erfindung sind in den abhängigen Patentansprüchen sowie in nachfolgender Beschreibung aufgeführt und können auch in Kombinationen untereinander angewendet werden, soweit technische Erwägungen dies gestatten, auch soweit dies hierin nicht explizit ausgeführt ist. Bevorzugten Ausgestaltungen des erfindungsgemäßen Kommunikationssystems entsprechen bevorzugte Ausgestaltungen des erfindungsgemäßen Verfahrens, des erfindungsgemäßen Computerprogrammprodukts und der erfindungsgemäßen Kombination umfassend zumindest einen computerlesbaren Datenträger und umgekehrt, und dies auch dann, wenn es hierin nicht explizit ausgeführt ist.

Zur Lösung der Aufgabe wird gemäß der Erfindung dementsprechend angegeben ein Kommunikationssystem mit einem Zentralterminal und mehreren Benutzerterminals, welches eingerichtet ist, um einen anonymisierten Fluss erster vertraulicher Datensätze zwischen dem Zentralterminal und den Benutzerterminals zu betreiben, wobei die vertraulichen Datensätze mittels erster Nachrichten von einem Benutzerterminal zu dem Zentralterminal gesendet und nach Empfangen einer ersten Nachricht durch das Zentralterminal mittels der ersten Nachricht entsprechender zweiter Nachrichten gleichzeitig an alle Benutzerterminals gesendet werden, wobei jede zweite Nachricht einen dem ersten vertraulichen Datensatz gleichenden zweiten vertraulichen Datensatz enthält und wobei jede zwei Benutzerterminals über ein Paar von Schlüsseln umfassend einen ersten Schlüssel zum Verschlüsseln der ersten vertraulichen Datensätze in jeweiligen ersten Nachrichten und einen zweiten Schlüssel zum Entschlüsseln zweiter vertraulicher Datensätze aus jeweiligen zweiten Nachrichten verfügen und jedes Paar von Schlüsseln einen Fluss vertraulicher Datensätze von einem Benutzerterminal zu genau einem anderen Benutzerterminal ermöglicht, bei welchem Kommunikationssystem jedes Benutzerterminal eingerichtet ist, um in jeder ersten Nachricht den verschlüsselten ersten vertraulichen Datensatz mit einem nicht verschlüsselten ersten offenen Datensatz zu kombinieren, und das Zentralterminal eingerichtet ist, um nach Empfangen einer ersten Nachricht eine der ersten Nachricht entsprechende zweite Nachricht, welche den zweiten vertraulichen Datensatz und einen dem ersten offenen Datensatz gleichenden zweiten offenen Datensatz enthält, an alle Benutzerterminals zu senden.

Zur Lösung der Aufgabe wird gemäß der Erfindung ebenfalls angegeben ein Verfahren zur Kommunikation zwischen einem Zentralterminal und mehreren Benutzerterminals, wobei ein anonymisierter Fluss erster vertraulicher Datensätze zwischen dem Zentralterminal und den Benutzerterminals betrieben wird, wobei die vertraulichen Datensätze mittels erster Nachrichten von einem Benutzerterminal zu dem Zentralterminal gesendet und nach Empfangen einer ersten Nachricht durch das Zentralterminal mittels der ersten Nachricht entsprechender zweiter Nachrichten gleichzeitig an alle Benutzerterminals gesendet werden, wobei jede zweite Nachricht einen dem ersten vertraulichen Datensatz gleichenden zweiten vertraulichen Datensatz enthält und wobei jede zwei Benutzerterminals über ein Paar von Schlüsseln umfassend einen ersten Schlüssel zum Verschlüsseln der jeweiligen ersten vertraulichen Datensätze in den ersten Nachrichten und einen zweiten Schlüssel zum Entschlüsseln der jeweiligen zweiten vertraulichen Datensätze in den zweiten Nachrichten verfügen und jedes Paar von Schlüsseln einen Fluss vertraulicher Datensätze von einem Benutzerterminal zu genau einem anderen Benutzerterminal ermöglicht, bei welchem Verfahren jedes Benutzerterminal in jeder ersten Nachricht den verschlüsselten ersten vertraulichen Datensatz mit einem nicht verschlüsselten ersten offenen Datensatz kombiniert und das Zentralterminal nach Empfangen der ersten Nachricht eine der ersten Nachricht entsprechende zweite Nachricht, welche den zweiten vertraulichen Datensatz und einen dem ersten offenen Datensatz gleichenden zweiten offenen Datensatz enthält, an alle Benutzerterminals sendet.

Zur Lösung der Aufgabe wird gemäß der Erfindung weiterhin angegeben ein Computerprogrammprodukt umfassend ein Zentralmodul von ersten Befehlen und ein Benutzermodul von zweiten Befehlen, wobei ein erster Computer bei Ausführung der ersten Befehle und zumindest ein zweiter Computer bei Ausführung der zweiten Befehle ein Verfahren gemäß der Erfindung ausführen, bei welchem Verfahren der erste Computer das Zentralterminal und jeder des zumindest einen zweiten Computers das Benutzerterminal darstellen.

Zur Lösung der Aufgabe wird gemäß der Erfindung fernerhin angegeben eine Kombination umfassend zumindest einen computerlesbaren Datenträger, auf welcher Kombination das erfindungsgemäße Computerprogrammprodukt gespeichert ist.

Erfindungsgemäß ist demnach vorgesehen, dass jedes Benutzerterminal in einer ersten Nachricht den ersten vertraulichen Datensatz mit einem ersten offenen Datensatz kombiniert, und das Zentralterminal eine der ersten Nachricht entsprechende zweite Nachricht, welche einen dem verschlüsselten ersten vertraulichen Datensatz gleichenden verschlüsselten zweiten vertraulichen Datensatz und einen dem ersten offenen Datensatz gleichenden zweiten offenen Datensatz enthält, an alle Benutzerterminals sendet.

Damit wird mit nur wenigen Maßnahmen erreicht, dass gleichzeitig mit dem vertraulichen Datensatz, der durch entsprechende Verschlüsselung nur von einem durch Wahl des entsprechenden ersten Schlüssels bestimmten Benutzerterminal gelesen werden kann, ein nicht vertraulicher, offener Datensatz kommuniziert wird, der von jedem Benutzerterminal gelesen werden kann und entsprechend durch jedes Benutzerterminal nutzbar ist. Ein Benutzerterminal, das nicht über den zum verwendeten ersten Schlüssel passenden zweiten Schlüssel verfügt, kann den vertraulichen Datensatz nicht lesen. Dadurch, dass der vertrauliche Datensatz gemeinsam mit dem nicht vertraulichen Datensatz durch Vermittlung des Zentralterminals übermittelt wird, ist es einem Benutzerterminal auch nicht möglich, das Benutzerterminal zu ermitteln, von dem der mit dem offenen Datensatz verkettete vertrauliche Datensatz stammt, es sei denn, dass der offene Datensatz einen Hinweis auf seine Herkunft, zum Beispiel Identitätsinformation des sendenden Benutzerterminals, enthält. Somit sind absolute Vertraulichkeit und völlige Anonymität des Datenflusses zwischen jeweils zwei Benutzerterminals möglich, wobei gleichzeitig die Verfügbarkeit offener Datensätze für alle über das Kommunikationssystem bzw. mittels des Verfahrens kommunizierenden Benutzerterminals gewährleistet ist. Anonymität gegenüber dem Zentralterminal ist derart gesichert, dass zwar dem Zentralterminal bekannt oder durch das Zentralterminal ermittelbar ist, von welchem Benutzerterminal ein vertraulicher Datensatz stammt, dass jedoch das Zentralterminal wegen der Verschlüsselung des vertraulichen Datensatzes und dessen Weiterleitung an alle Benutzerterminals aber nicht weiß und nicht ermitteln kann, an welches der Benutzerterminale der vertrauliche Datensatz gerichtet ist und welchen Inhalt der vertrauliche Datensatz hat.

In einer bevorzugten Ausgestaltung der Erfindung ist in jedem Paar von Schlüsseln der erste Schlüssel ein öffentlicher Schlüssel und der zweite Schlüssel ein privater Schlüssel, was bedeutet, dass ein asymmetrisches Verschlüsselungsverfahren zum Einsatz kommt. Dies hat den Vorteil, dass der öffentliche Schlüssel eines Benutzerterminals jedem anderen Benutzerterminal und bei Bedarf auch dem Zentralterminal gegeben werden kann, und für jedes Benutzerterminal zur vertraulichen Kommunikation mit den jeweils anderen Benutzerterminals nur der eigene private Schlüssel sowie die öffentlichen Schlüssel der anderen Benutzerterminals erforderlich sind. Dies erleichtert sowohl die Einrichtung des Kommunikationssystems als auch die Verwaltung der Schlüssel.

In einer anderen bevorzugten Ausgestaltung der Erfindung ist das Zentralterminal mit jedem Benutzerterminal über eine entsprechende individuelle bidirektionale Verbindung verbunden. Mit weiterem Vorteil ist dabei jede individuelle Verbindung bidirektional verschlüsselt. Damit ist das Kommunikationssystem gegen externe Einflüsse und das Eindringen externer Instanzen gesichert und kann in einem prinzipiell öffentlichen Kommunikationsnetz, zum Beispiel dem Internet, implementiert werden.

In einer weiteren bevorzugten Ausgestaltung der Erfindung ist das Zentralterminal zusätzlich eingerichtet, um jeden offenen Datensatz zu lesen und zu einem ersten Ergebnis zu verarbeiten, und das erste Ergebnis in einem entsprechenden zweiten offenen Datensatz mittels zweiter Nachrichten unverschlüsselt an alle Benutzerterminals zu senden, und sind die Benutzerterminals eingerichtet, um den zweiten offenen Datensatz zu lesen und das erste Ergebnis zu verarbeiten. Mit weiterem Vorzug ist das Zentralterminal dabei eingerichtet, um eine Mehrzahl, insbesondere einer Vielzahl, erster offener Datensätze zu dem ersten Ergebnis zu verarbeiten. Hierbei nimmt das Zentralterminal neben einer Funktion der Koordination der Kommunikation zwischen den Benutzerterminals eine Funktion der Auswertung der im Rahmen dieser Kommunikation zwischen den Benutzerterminals ausgetauschten offenen Datensätze an und stellt das Ergebnis dieser Auswertung den Benutzerterminals zur Verfügung. In den oben genannten Beispielen kann eine solche Auswertung nicht vertrauliche medizinische Daten im Rahmen einer medizinischen Studie betreffen, oder Angebotspreise von Waren oder Dienstleistungen zur Stellung von Kursen für Transaktionen an einer Börse, oder die Ableitung zusätzlicher Information aus nicht vertraulichen Daten von Transaktionen durch ein Expertensystem, wobei solche zusätzliche Information einen mit Waren oder Dienstleistungen verbundenen Treibhauseffekt auf die Atmosphäre der Erde betreffen könnte.

In einer zusätzlichen bevorzugten Ausgestaltung der Erfindung ist ein Benutzerterminal eingerichtet, um zweite offene Datensätze aus jeder zweiten Nachricht zu lesen und zu einem zweiten Ergebnis zu verarbeiten, und das zweite Ergebnis mittels einer ersten Nachricht an das Zentralterminal zu senden, wobei das Zentralterminal eingerichtet sein kann, um das zweite Ergebnis mittels zweiter Nachrichten an alle Benutzerterminals zu senden, und bei dem die Benutzerterminals eingerichtet sind, um das zweite Ergebnis aus den zweiten Nachrichten zu lesen und das zweite Ergebnis zu verarbeiten. Mit weiterem Vorzug ist das Benutzerterminal dabei eingerichtet, um eine Mehrzahl, insbesondere eine Vielzahl, zweiter offener Datensätze zu dem zweiten Ergebnis zu verarbeiten. Hierbei tritt das entsprechende Benutzerterminal in der im vorigen Absatz beschriebenen bevorzugten Ausgestaltung an die Stelle des Zentralterminals mit den für jenes dort beschriebenen Funktionen.

In noch einer bevorzugten Ausgestaltung der Erfindung umfassen die Benutzerterminals ein erstes Benutzerterminal, ein zweites Benutzerterminal und zumindest ein drittes Benutzerterminal, wobei das erste Benutzerterminal und das zweite Benutzerterminal eingerichtet sind, um über die ersten Nachrichten und die zweiten Nachrichten vertrauliche Datensätze und offene Datensätze auszutauschen, und wobei das erste Benutzerterminal, das zweite Benutzerterminal und das zumindest eine dritte Benutzerterminal eingerichtet sind, um über die ersten Nachrichten und die zweiten Nachrichten offene Datensätze auszutauschen. Insbesondere kann jedes Benutzerterminal außer dem ersten Benutzerterminal und dem zweiten Benutzerterminal ein drittes Benutzerterminal sein. Auch diese bevorzugte Ausgestaltung unterstützt die Anwendung der Erfindung in den oben genannten Beispielen.

In noch einer anderen bevorzugten Ausgestaltung der Erfindung ist Identitätsinformation jedes Benutzerterminals im ersten offenen Datensatz jeder von diesem gesendeten ersten Nachricht enthalten. Damit erlaubt die Erfindung eine Zuordnung erster offener Datensätze zu den Benutzerterminals, die diese jeweils gesendet haben, und beschränkt die Anonymität des Datenflusses damit auf die ersten vertraulichen Datensätze. Mit weiterem Vorzug ist jedes Benutzerterminal dabei eingerichtet, um auf jeden empfangenen zweiten offenen Datensatz, welcher Identitätsinformation eines Benutzerterminals enthält, das nicht mit dem empfangenden Benutzerterminal identisch ist, eine erste Nachricht an das Zentralterminal zu senden, welche einen ersten vertraulichen Datensatz enthält, der einem ersten Schlüssel verschlüsselt ist, der zu einem Paar von Schlüsseln gehört, über welches das Benutzerterminal, dessen Identitätsinformation in dem zweiten offenen Datensatz enthalten ist, und das die erste Nachricht sendende Benutzerterminal verfügen. Indem solcherart ein Benutzerterminal seine zugehörigen Identitätsinformation in einem ersten offenen Datensatz sendet, veranlasst es ein anderes Benutzerterminal (oder dessen Benutzer) zu einer Antwort, die durch Anwendung der spezifischen Verschlüsselung zwischen dem veranlassenden Benutzerterminal und dem antwortenden Benutzerterminal vertraulich ist. Die erste Nachricht des veranlassenden Benutzerterminals kann zum Beispiel eine an alle Benutzerterminals gerichtete, also offene Aufforderung zur Abgabe eines Angebot für eine bestimmte Transaktion sein, und die erste Nachricht des antwortenden Benutzerterminals ein entsprechendes, durch die Verschlüsselung vertrauliches, Angebot.

Ausführungsbeispiele der Erfindung sind nachfolgend anhand der beigefügten Zeichnung näher erläutert. Es zeigen:
- Fig. 1: eine schematische Ansicht eines Kommunikationssystems;
- Fig. 2: ein Schema eines Kommunikationsprozesses im Kommunikationssystem gemäß Fig. 1; und
- Fig. 3: eine schematisierte Ansicht einer Ergänzung des Kommunikationssystems gemäß Fig. 1.

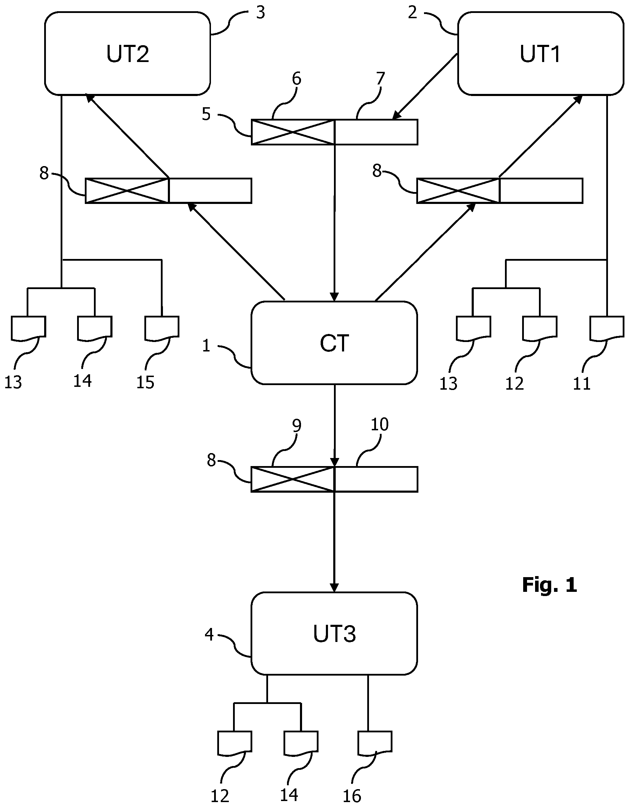

Figur 1 zeigt eine schematische Ansicht eines Kommunikationssystems mit einem Zentralterminal 1 und mehreren Benutzerterminals 2, 3, 4, welches eingerichtet ist, um einen anonymisierten Fluss vertraulicher Datensätze 6, 9 zwischen dem Zentralterminal 1 und den Benutzerterminals 2, 3, 4 zu betreiben. Dabei werden erste vertrauliche Datensätze 6 mittels erster Nachrichten 5 von einem Benutzerterminal 2, 3, 4 zu dem Zentralterminal 1 gesendet. Nach Empfangen einer ersten Nachricht 5 durch das Zentralterminal 1 werden mittels der ersten Nachricht 5 entsprechende zweite Nachrichten 8 gleichzeitig an alle Benutzerterminals 2, 3, 4 gesendet werden, wobei jede zweite Nachricht 8 einen dem ersten vertraulichen Datensatz 6 gleichenden zweiten vertraulichen Datensatz 9 enthält. Jede zwei Benutzerterminals 2, 3, 4 verfügen über ein Paar von Schlüsseln 11, 12, 13, 14, 15, 16 umfassend einen ersten Schlüssel 12, 13, 14 zum Verschlüsseln der ersten vertraulichen Datensätze 6 in jeweiligen ersten Nachrichten 5 und einen zweiten Schlüssel 11, 15, 16 zum Entschlüsseln zweiter vertraulicher Datensätze 9 aus jeweiligen zweiten Nachrichten 8, wobei jedes Paar von Schlüsseln 11, 12, 13, 14, 15, 16 einen Fluss vertraulicher Datensätze 6, 9 von einem Benutzerterminal 2, 3, 4 zu genau einem anderen Benutzerterminal 2, 3, 4 ermöglicht.

Des Weiteren ist jedes Benutzerterminal 2, 3, 4 eingerichtet, um in jeder ersten Nachricht 5 den verschlüsselten ersten vertraulichen Datensatz 6 mit einem nicht verschlüsselten ersten offenen Datensatz 7 zu kombinieren, und das Zentralterminal 1 ist eingerichtet, um nach Empfangen einer ersten Nachricht 5 eine der ersten Nachricht 5 entsprechende zweite Nachricht 8, welche den zweiten vertraulichen Datensatz 9 und einen dem ersten offenen Datensatz 7 gleichenden zweiten offenen Datensatz 10 enthält, an alle Benutzerterminals 2, 3, 4 zu senden.

Gleichzeitig mit einem vertraulichen Datensatz 6, der durch entsprechende Verschlüsselung nur von einem durch Wahl des entsprechenden ersten Schlüssels 12, 13, 14 bestimmten Benutzerterminal 2, 3, 4 gelesen werden kann, wird ein nicht vertraulicher, erster offener Datensatz 7 kommuniziert, der von dem Zentralterminal 1 und jedem Benutzerterminal 2, 3, 4 gelesen werden kann und entsprechend durch jedes Benutzerterminal 2, 3, 4 nutzbar ist. Ein Benutzerterminal 2, 3, 4, das nicht über den zum verwendeten ersten Schlüssel 12, 13, 14 passenden zweiten Schlüssel 11, 15, 16 verfügt, kann den entsprechenden zweiten vertraulichen Datensatz 9 nicht lesen.

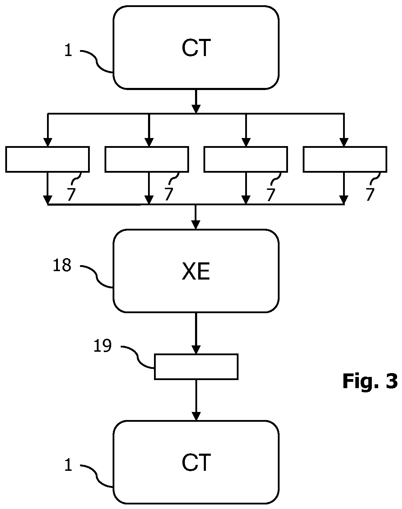

Dadurch, dass der zweite vertrauliche Datensatz 9 gemeinsam mit dem nicht vertraulichen zweiten offenen Datensatz 10 durch Vermittlung des Zentralterminals 1 übermittelt wird, ist es einem Benutzerterminal 2, 3, 4 auch nicht möglich, das Benutzerterminal 2, 3, 4 zu ermitteln, von dem der mit dem zweiten offenen Datensatz 10 verkettete zweite vertrauliche Datensatz 9 stammt, es sei denn, dass der zweite offene Datensatz 10 einen Hinweis auf seine Herkunft, zum Beispiel Identitätsinformation 17 des sendenden Benutzerterminals 2, 3, 4, enthält - siehe dazu Fig. 3. Somit ist absolute Vertraulichkeit und völlige Anonymität des Datenflusses zwischen jeweils zwei Benutzerterminals 2, 3, 4 möglich, wobei gleichzeitig die Verfügbarkeit offener Datensätze 7, 10 für alle über das Kommunikationssystem bzw. mittels des Verfahrens kommunizierenden Benutzerterminals 2, 3, 4 gewährleistet ist. Anonymität gegenüber dem Zentralterminal 1 ist derart gesichert, dass dem Zentralterminal 1 bekannt ist, von welchem Benutzerterminal 2, 3, 4 ein erster vertraulicher Datensatz 6 stammt, wobei das Zentralterminal 1 wegen der Verschlüsselung des ersten vertraulichen Datensatzes 6 und dessen Weiterleitung an alle Benutzerterminals 2, 3, 4 aber nicht weiß und nicht ermitteln kann, an welches Benutzerterminal 2,3, 4 der erste vertrauliche Datensatz 6 gerichtet ist und welchen Inhalt er hat.

Vorliegend sind drei Benutzerterminals 2, 3, 4 gezeigt, wobei die Zahl der Benutzerterminals 2, 3, 4 vorbehaltlich verfügbarer Datenverarbeitungskapazität beim Zentralterminal 1 und bei den Benutzerterminals 2, 3, 4 nicht beschränkt ist.

In jedem Paar von Schlüsseln 11, 12, 13, 14, 15, 16 sind der jeweilige erste Schlüssel 12, 13, 14 ein öffentlicher Schlüssel und der jeweilige zweite Schlüssel 11, 15, 16 ein privater Schlüssel. Dies hat den Vorteil, dass zur Errichtung des Kommunikationssystems jedes neu hinzutretende Benutzerterminal 2, 3, 4 seine eigenen Schlüssel 11, 12, 13, 14, 15, 16 beitragen kann, wobei es seinen privaten Schlüssel behält und den öffentlichen Schlüssel als ersten offenen Datensatz 7 über das Zentralterminal 1 an die übrigen Benutzerterminals 2, 3, 4 senden kann. Dieses Konzept der asymmetrischen Verschlüsselung hat den Vorteil, dass der öffentliche Schlüssel jedes Benutzerterminals 2, 3, 4 jedem anderen Benutzerterminal 2, 3, 4 und bei Bedarf auch dem Zentralterminal 1 gegeben werden kann, wodurch zur vertraulichen Kommunikation mit den jeweils anderen Benutzerterminals 2, 3, 4 nur der eigene private Schlüssel sowie die öffentlichen Schlüssel der anderen Benutzerterminals 2, 3, 4 erforderlich sind. Dies erleichtert sowohl die Einrichtung des Kommunikationssystems als auch die Verwaltung der Schlüssel 11, 12, 13, 14, 15, 16.

Das Zentralterminal 1 ist mit jedem Benutzerterminal 2, 3, 4 über eine entsprechende individuelle bidirektionale Verbindung verbunden, wobei diese Verbindungen nicht notwendig untereinander gleich sein müssen, sofern nur die Möglichkeit der teils vertraulichen, teils offenen Kommunikation unter den Benutzerterminals 2, 3, 4 und mit dem Zentralterminal 1 Kommunikation gegeben ist. Dabei kann auch jede individuelle Verbindung bidirektional verschlüsselt sein, wozu andere Schlüssel als die hier näher beschriebenen angewendet werden, um die Vertraulichkeit jeder Kommunikation innerhalb des Kommunikationssystems zu gewährleisten und von der "Außenwelt", zum Beispiel verkörpert vom Internet oder einem anderen prinzipiell offenen Netzwerk, in welches das Kommunikationssystem ganz oder teilweise eingebettet sein kann, zu isolieren.

Im Kommunikationssystem gemäß Fig. 1 umfassen die Benutzerterminals 2, 3, 4 ein erstes Benutzerterminal 2, ein zweites Benutzerterminal 3 und zumindest ein drittes Benutzerterminal 4 umfassen, wobei insbesondere das erste Benutzerterminal 2 und das zweite Benutzerterminal 3 eingerichtet sind, um über die ersten Nachrichten 5 und die zweiten Nachrichten 8 vertrauliche Datensätze 6, 9 und offene Datensätze 7, 10 auszutauschen, und wobei das erste Benutzerterminal 2, das zweite Benutzerterminal 3 und das zumindest eine dritte Benutzerterminal 4 eingerichtet sind, um über die ersten Nachrichten 5 und die zweiten Nachrichten 8 offene Datensätze 7, 10 auszutauschen. Der Austausch vertraulicher Datensätze 6, 9 erfolgt dabei durch entsprechende Anwendung der privaten Schlüssel 11 und 15 und der offenen Schlüssel 12 und 14, wobei jeweils die Schlüssel 11 und 14 einerseits sowie 12 und 15 andererseits ein Paar der oben erwähnten Art bilden, welches einen Fluss vertraulicher Datensätze 6, 9 von dem Benutzerterminal 2 oder 3 zu genau einem anderen Benutzerterminal, in diesem Fall ebenfalls 2 oder 3, ermöglicht.

Das Kommunikationssystem gemäß Figur 1 erlaubt einen vollständig anonymisierten Fluss vertraulicher Datensätze 6 und 9 zwischen den Benutzerterminals 3, 4, 5 und dem Zentralterminal 1, solange diese Vertraulichkeit nicht durch entsprechende Information in einem parallel übermittelten offenen Datensatz 7, 10 aufgehoben wird. Ohne solche entsprechende Information kann nur dasjenige Benutzerterminal 2, 3, 4, dessen offener Schlüssel 11, 15, 16 zum Verschlüsseln eines vertraulichen Datensatzes 6, 9 benutzt wurde, diesen vertraulichen Datensatz 6, 9 entschlüsseln und somit zur Kenntnis nehmen, und jedem anderen Benutzerterminal 2, 3, 4 ist es nicht einmal möglich festzustellen, von welchem Benutzerterminal 2, 3, 4 dieser vertrauliche Datensatz 6, 9 gesendet worden ist. Dadurch ist dieses Kommunikationssystem geeignet zur Verwendung in einer Studie der Art medizinischer Studien, in der Betreiber einer Studie, insbesondere Ärzte, mit anderen Personen, die Daten zur Auswertung im Rahmen der Studie liefern, kommunizieren. Mit diesem Kommunikationssystem kann die Mitteilung schutzbedürftiger, insbesondere persönlicher, Daten auf entsprechend vorgesehene und zum Umgang mit diesen Daten befugte Betreiber der Studie beschränkt werden, ohne gleichzeitig die Verbreitung nicht schutzbedürftiger Daten an alle Betreiber einzuschränken. Eine Analyse des Datenflusses zwischen den Benutzerterminals 2, 3, 4 ist nicht möglich. Weder kann festgestellt werden, welche Benutzerterminals 2, 3, 4 miteinander kommunizieren, noch können die Inhalte der vertraulichen Datensätze 6 und 9 unbefugt gelesen werden.

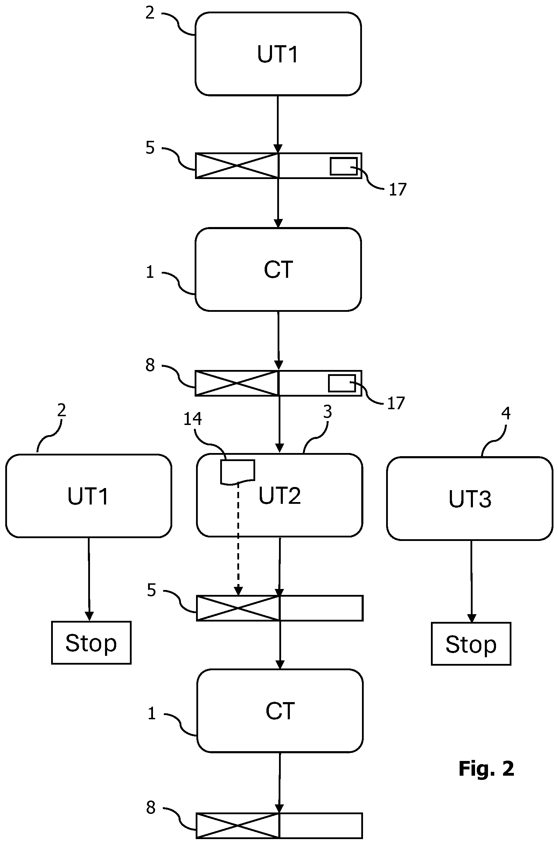

Figur 2 zeigt ein Schema eines Kommunikationsprozesses im Kommunikationssystem gemäß Fig. 1, bei dem die vollständige Anonymisierung der vertraulichen Kommunikation aufgehoben ist, um den Kommunikationsprozess zum Beispiel im Rahmen einer Börse für Waren oder Dienstleistungen anzuwenden, wobei unter Verwendung der Benutzerterminals 2, 3, 4 Handelsgeschäfte unter deren Benutzern vorgenommen werden. Dabei sendet jedes Benutzerterminal 2, 3, 4 ihm zugehörige Identitätsinformation 17 im ersten offenen Datensatz 7 jeder ersten Nachricht 5, und verbindet diese Identitätsinformation 17 mit einem Angebot für oder einer Nachfrage nach einer Ware oder einer Dienstleistung ebenfalls im ersten offenen Datensatz 7. Weiter ist jedes Benutzerterminal 2, 3, 4 eingerichtet, um auf jeden empfangenen zweiten offenen Datensatz 10, welcher Identitätsinformation 17 eines Benutzerterminals 2, 3, 4 enthält, das nicht mit dem empfangenden Benutzerterminal 2, 3, 4 identisch ist, eine erste Nachricht 5 an das Zentralterminal 1 sendet, welche einen ersten vertraulichen Datensatz 6 enthält, der mit einem ersten Schlüssel 12, 13, 14 verschlüsselt ist, der zu einem Paar von Schlüsseln 11, 12, 13, 14, 15, 16 gehört, über welches das Benutzerterminal 2, 3, 4, dessen Identitätsinformation 17 in dem zweiten offenen Datensatz 10 enthalten ist, und das die erste Nachricht 5 sendende Benutzerterminal 2, 3, 4 verfügen. Damit erzeugt das empfangende Benutzerterminal 2, 3, 4 einen ersten vertraulichen Datensatz 6, welchen das die Identitätsinformation gesendet habende Benutzerterminal 2, 3, 4, und nur dieses, entschlüsseln und somit zur Kenntnis nehmen kann, womit eine vertrauliche Antwort auf den zweiten offenen Datensatz 10 mit der Identitätsinformation 17 und damit eine vertrauliche Reaktion auf den zweiten offenen Datensatz 10 mit der Identitätsinformation 17, möglich ist. So kann zum Beispiel auf ein in dem zweiten offenen Datensatz 10 mit der Identitätsinformation 17 enthaltenes Angebot vertraulich reagiert werden, zum Beispiel mit einer Annahme, mit einem Gegenangebot, einer Ablehnung oder weiteren Daten, die für eine mit dem Angebot verbundene Transaktion von Bedeutung sind.

Figur 3 zeigt eine schematisierte Ansicht einer Ergänzung des Kommunikationssystems gemäß Fig. 1, bei der das Zentralterminal 1 eingerichtet ist, um jeden ersten offenen Datensatz 7 zu lesen und zu einem ersten Ergebnis 19 zu verarbeiten, und das erste Ergebnis 19 in einem zweiten offenen Datensatz 10 mittels zweiter Nachrichten 8 unverschlüsselt an alle Benutzerterminals 2, 3, 4 zu senden, und bei dem die Benutzerterminals 2, 3, 4 eingerichtet sind, um das erste Ergebnis 19 zu verarbeiten. Das Zentralterminal 1 übernimmt und erfüllt dabei zum Beispiel die Aufgabe, Daten aus einem ersten offenen Datensatz 7 oder, wie dargestellt, einer Mehrzahl oder Vielzahl solcher erster Datensätze 7, zu lesen und zu verarbeiten. Im Rahmen obiger Funktion als Börse kann diese Verarbeitung geschäftliche Daten und die Stellung eines Preises für eine bestimmte Ware oder Dienstleistung sein. Im Rahmen der Durchführung einer Studie kann diese Verarbeitung zum Beispiel eine statistische Auswertung bestimmter Daten, die Gegenstand einer Studie sind, sein.

Die Erweiterung der Figur 3 sieht vor, dass nicht das Zentralterminal 1 die Verarbeitung der ersten offenen Datensätze 7 selbst vornimmt, sondern diese an einen Evaluator 18 weitergibt, welcher die ersten offenen Datensätze 7 zu dem Ergebnis 19 verarbeitet und dies an das Zentralterminal 1 zurückgibt, damit dieses das Ergebnis 19 mittels zweiter Nachrichten 8 an die Benutzerterminals 2, 3, 4 weiterleitet. Diese Erweiterung kommt insbesondere dann in Betracht, wenn das Ergebnis 19 von einem Evaluator 19 kommen soll, der in keiner Weise von den Benutzern des Zentralterminals 1 und der Benutzerterminals 2, 3, 4 abhängig ist und zum Beispiel einem mit öffentlichem Glauben versehenen Experten zugehört. Ein denkbarer Anwendungsfall ist eine Börse für Betriebsmittel wie Erdgas, Öl und elektrischer Strom, an der das Kommunikationssystem zum Handel mit diesen Betriebsmittel angewendet wird und bei der der Evaluator 18 als unabhängiger Experte dazu dient, zu gehandelten Mengen von Betriebsstoffen eine damit verbundene Emission von Abfall, beispielsweise Kohlendioxid, mit verbindlicher Geltung anzugeben.

In der Erweiterung der Fig. 3 kann gegebenenfalls eines der Benutzerterminals 2, 3, 4 die zusätzliche Aufgabe des Zentralterminals 1 übernehmen und stattdessen mit dem Evaluator 18 kommunizieren, bei entsprechender Anpassung der Kommunikation mit dem Zentralterminal 1 und den anderen Benutzerterminals 2, 3, 4.

Das beschriebene Kommunikationssystem und das beschriebene Verfahren können auch verkörpert sein in einem Computerprogrammprodukt umfassend ein Zentralmodul von ersten Befehlen und ein Benutzermodul von zweiten Befehlen, wobei ein erster Computer bei Ausführung der ersten Befehle und zumindest ein zweiter Computer bei Ausführung der zweiten Befehle das beschriebene Kommunikationsverfahren oder eine seiner beschriebenen Aus- und Weiterbildungen ausführen. Dabei sind zum Beispiel der erste Computer das Zentralterminal 1 und jeder des zumindest einen zweiten Computers eines der Benutzerterminals 2, 3, 4. Gleichermaßen können das beschriebene Kommunikationssystem und das beschriebene Verfahren verkörpert sein in einer Kombination umfassend zumindest einen computerlesbaren Datenträger, auf welcher Kombination das soeben beschriebene Computerprogrammprodukt gespeichert ist.

Das hier beschriebene Kommunikationssystem und das hier beschriebene Verfahren erreichen, dass gleichzeitig mit einem vertraulichen Datensatz 6, 9, der durch entsprechende Verschlüsselung nur von einem durch Wahl des entsprechenden ersten Schlüssels 12, 13, 14 bestimmten Benutzerterminal 2, 3, 4 gelesen werden kann, ein nicht vertraulicher, offener Datensatz 7, 10 kommuniziert wird, der von jedem Benutzerterminal 2, 3, 4 gelesen werden kann und entsprechend durch jedes Benutzerterminal 2, 3, 4 nutzbar ist. Ein Benutzerterminal 2, 3, 4, das nicht über den zum verwendeten ersten Schlüssel 12, 13, 14 passenden zweiten Schlüssel 11, 15, 16 verfügt, kann den vertraulichen Datensatz 6, 9 nicht lesen. Dadurch, dass der vertrauliche Datensatz 6, 9 gemeinsam mit dem nicht vertraulichen Datensatz 7, 10 durch Vermittlung des Zentralterminals 1 übermittelt wird, ist es einem Benutzerterminal 2, 3, 4 auch nicht möglich, das Benutzerterminal 2, 3, 4 zu ermitteln, von dem der mit dem offenen Datensatz 7, 10 verkettete vertrauliche Datensatz 6, 9 stammt, es sei denn, dass der offene Datensatz 7, 10 einen Hinweis auf seine Herkunft, zum Beispiel Identitätsinformation 17 des sendenden Benutzerterminals 2, 3, 4, enthält. Somit ist absolute Vertraulichkeit und völlige Anonymität des Datenflusses zwischen jeweils zwei Benutzerterminals 2, 3, 4 möglich, wobei gleichzeitig die Verfügbarkeit offener Datensätze 7, 10 für alle über das Kommunikationssystem bzw. mittels des Verfahrens kommunizierenden Benutzerterminals 2, 3, 4 gewährleistet ist.

### Bezugszeichenliste

1. Zentralterminal (CT)
2. Erstes Benutzerterminal (UT1)
3. Zweites Benutzerterminal (UT2)
4. Benutzerterminal (UT3)
5. Erste Nachricht
6. Erster vertraulicher Datensatz
7. Erster offener Datensatz
8. Zweite Nachricht
9. Zweiter vertraulicher Datensatz
10. Zweiter offener Datensatz
11. Erster privater Schlüssel
12. Zweiter offener Schlüssel
13. Dritter offener Schlüssel
14. Erster offener Schlüssel
15. Zweiter privater Schlüssel
16. Dritter privater Schlüssel
17. Identitätsinformation
18. Evaluator
19. Ergebnis

## Patentansprüche

1. Kommunikationssystem mit einem Zentralterminal (1) und mehreren Benutzerterminals (2, 3, 4), welches eingerichtet ist, um einen anonymisierten Fluss vertraulicher Datensätze (6, 9) zwischen dem Zentralterminal (1) und den Benutzerterminals (2, 3, 4) zu betreiben, wobei erste vertrauliche Datensätze (6) mittels erster Nachrichten (5) von einem Benutzerterminal (2, 3, 4) zu dem Zentralterminal (1) gesendet und nach Empfangen einer ersten Nachricht (5) durch das Zentralterminal (1) mittels der ersten Nachricht (5) entsprechender zweiter Nachrichten (8) gleichzeitig an alle Benutzerterminals (2, 3, 4) gesendet werden, wobei jede zweite Nachricht (8) einen dem ersten vertraulichen Datensatz (6) gleichenden zweiten vertraulichen Datensatz (9) enthält und wobei jede zwei Benutzerterminals (2, 3, 4) über ein Paar von Schlüsseln (11, 12, 13, 14, 15, 16) umfassend einen ersten Schlüssel (12, 13, 14) zum Verschlüsseln der ersten vertraulichen Datensätze (6) in jeweiligen ersten Nachrichten (5) und einen zweiten Schlüssel (11, 15, 16) zum Entschlüsseln zweiter vertraulicher Datensätze (9) aus jeweiligen zweiten Nachrichten (8) verfügen und jedes Paar von Schlüsseln (11, 12, 13, 14, 15, 16) einen Fluss vertraulicher Datensätze (6, 9) von einem Benutzerterminal (2, 3, 4) zu genau einem anderen Benutzerterminal (2, 3, 4) ermöglicht, **dadurch gekennzeichnet, dass** jedes Benutzerterminal (2, 3, 4) eingerichtet ist, um in jeder ersten Nachricht (5) den verschlüsselten ersten vertraulichen Datensatz (6) mit einem nicht verschlüsselten ersten offenen Datensatz (7) zu kombinieren, und das Zentralterminal (1) eingerichtet ist, um nach Empfangen einer ersten Nachricht (5) eine der ersten Nachricht (5) entsprechende zweite Nachricht (8), welche den zweiten vertraulichen Datensatz (9) und einen dem ersten offenen Datensatz (7) gleichenden zweiten offenen Datensatz (10) enthält, an alle Benutzerterminals (2, 3, 4) zu senden.

2. Kommunikationssystem nach Anspruch 1, bei dem in jedem Paar von Schlüsseln (11, 12, 13, 14, 15, 16) der erste Schlüssel (12, 13, 14) ein öffentlicher Schlüssel und der zweite Schlüssel (11, 15, 16) ein privater Schlüssel ist.

3. Kommunikationssystem nach einem der vorigen Ansprüche, bei dem das Zentralterminal (1) mit jedem Benutzerterminal (2, 3, 4) über eine entsprechende individuelle bidirektionale Verbindung verbunden ist.

4. Kommunikationssystem nach Anspruch 3, bei dem jede individuelle Verbindung bidirektional verschlüsselt ist.

5. Kommunikationssystem nach einem der vorigen Ansprüche, bei dem das Zentralterminal (1) zusätzlich eingerichtet ist, um jeden ersten offenen Datensatz (7) zu lesen und zu einem ersten Ergebnis (19) zu verarbeiten, und das erste Ergebnis (19) in einem zweiten offenen Datensatz (10) mittels zweiter Nachrichten (8) unverschlüsselt an alle Benutzerterminals (2, 3, 4) zu senden, und bei dem die Benutzerterminals (2, 3, 4) eingerichtet sind, um das erste Ergebnis (19) zu verarbeiten.

6. Kommunikationssystem nach Anspruch 5, bei dem das Zentralterminal (1) eingerichtet ist, um eine Mehrzahl, insbesondere eine Vielzahl, erster offener Datensätze (7) zu dem ersten Ergebnis (19) zu verarbeiten.

7. Kommunikationssystem nach einem der Ansprüche 1 bis 4, bei dem ein Benutzerterminal (2, 3, 4) eingerichtet ist, um jeden ersten offenen Datensatz (7) zu lesen und zu einem zweiten Ergebnis (19) zu verarbeiten, und das zweite Ergebnis (19) in einem ersten offenen Datensatz (7) mittels einer ersten Nachricht (5) an das Zentralterminal (1) zu senden.

8. Kommunikationssystem nach Anspruch 7, bei dem das Benutzerterminal (2, 3, 4) eingerichtet ist, um eine Mehrzahl, insbesondere eine Vielzahl, erster offener Datensätze (7) zu dem zweiten Ergebnis (19) zu verarbeiten.

9. Kommunikationssystem nach einem der vorigen Ansprüche, bei dem die Benutzerterminals (2, 3, 4) ein erstes Benutzerterminal (2), ein zweites Benutzerterminal (3) und zumindest ein drittes Benutzerterminal (4) umfassen, wobei das erste Benutzerterminal (2) und das zweite Benutzerterminal (3) eingerichtet sind, um über die ersten Nachrichten (5) und die zweiten Nachrichten (8) vertrauliche Datensätze (6, 9) und offene Datensätze (7, 10) auszutauschen, und wobei das erste Benutzerterminal (2), das zweite Benutzerterminal (3) und das zumindest eine dritte Benutzerterminal (4) eingerichtet sind, um über die ersten Nachrichten (5) und die zweiten Nachrichten (8) offene Datensätze (7, 10) auszutauschen.

10. Kommunikationssystem nach einem der vorigen Ansprüche, welches derart eingerichtet ist, dass Identitätsinformation (17) jedes Benutzerterminals (2, 3, 4) im ersten offenen Datensatz (7) jeder von diesem gesendeten ersten Nachricht (5) enthalten ist.

11. Kommunikationssystem nach Anspruch 10, bei dem jedes Benutzerterminal (2, 3, 4) eingerichtet ist, um auf jeden empfangenen zweiten offenen Datensatz (10), welcher Identitätsinformation (17) eines Benutzerterminals (2, 3, 4) enthält, das nicht mit dem empfangenden Benutzerterminal (2, 3, 4) identisch ist, eine erste Nachricht (5) an das Zentralterminal (1) zu senden, welche einen ersten vertraulichen Datensatz (6) enthält, der mit einem ersten Schlüssel (12, 13, 14) verschlüsselt ist, der zu einem Paar von Schlüsseln (11, 12, 13, 14, 15, 16) gehört, über welches das Benutzerterminal (2, 3, 4), dessen Identitätsinformation (17) in dem zweiten offenen Datensatz (10) enthalten ist, und das die erste Nachricht (5) sendende Benutzerterminal (2, 3, 4) verfügen.

12. Verfahren zur Kommunikation zwischen einem Zentralterminal (1) und mehreren Benutzerterminals (2, 3, 4), wobei ein anonymisierter Fluss vertraulicher Datensätze (6, 9) zwischen dem Zentralterminal (1) und den Benutzerterminals (2, 3, 4) betrieben wird, wobei erste vertraulichen Datensätze (6) mittels erster Nachrichten (5) von einem Benutzerterminal (2, 3, 4) zu dem Zentralterminal (1) gesendet und nach Empfangen einer ersten Nachricht (5) durch das Zentralterminal (1) mittels der ersten Nachricht (5) entsprechender zweiter Nachrichten (8) gleichzeitig an alle Benutzerterminals (2, 3, 4) gesendet werden, wobei jede zweite Nachricht (8) einen dem ersten vertraulichen Datensatz (6) gleichenden zweiten vertraulichen Datensatz (9) enthält und wobei jede zwei Benutzerterminals (2, 3, 4) über ein Paar von Schlüsseln (11, 12, 13, 14, 15, 16) umfassend einen ersten Schlüssel (12, 13, 14) zum Verschlüsseln der jeweiligen ersten vertraulichen Datensätze (6) in den ersten Nachrichten (5) und einen zweiten Schlüssel (11, 15, 16) zum Entschlüsseln der jeweiligen zweiten vertraulichen Datensätze (9) in den zweiten Nachrichten (8) verfügen und jedes Paar von Schlüsseln (11, 12, 13, 14, 15, 16) einen Fluss vertraulicher Datensätze (6, 9) von einem Benutzerterminal (2, 3, 4) zu genau einem anderen Benutzerterminal (2, 3, 4) ermöglicht, **dadurch gekennzeichnet, dass** jedes Benutzerterminal (2, 3, 4) in jeder ersten Nachricht (5) den verschlüsselten ersten vertraulichen Datensatz (6) mit einem nicht verschlüsselten ersten offenen Datensatz (7) kombiniert und das Zentralterminal (1) nach Empfangen der ersten Nachricht (5) eine der ersten Nachricht (5) entsprechende zweite Nachricht (8), welche den zweiten vertraulichen Datensatz (9) und einen dem ersten offenen Datensatz (7) gleichenden zweiten offenen Datensatz (10) enthält, an alle Benutzerterminals (2, 3, 4) sendet.

13. Verfahren nach Anspruch 12, bei dem die Benutzerterminals (2, 3, 4) ein erstes Benutzerterminal (2), ein zweites Benutzerterminal (3) und zumindest ein drittes Benutzerterminal (4) umfassen, wobei das erste Benutzerterminal (2) und das zweite Benutzerterminal (3) über die ersten Nachrichten (5) und die zweiten Nachrichten (8) vertrauliche Datensätze (6, 9) und offene Datensätze (7, 10) austauschen, und wobei das erste Benutzerterminal (2), das zweite Benutzerterminal (3) und das zumindest eine dritte Benutzerterminal (4) über die ersten Nachrichten (5) und die zweiten Nachrichten (8) offene Datensätze (7, 10) austauschen.

14. Verfahren nach einem der Ansprüche 12 und 13, bei dem jedes Benutzerterminal (2, 3, 4) ihm zugehörige Identitätsinformation (17) im ersten offenen Datensatz (7) jeder ersten Nachricht (5) sendet.

15. Verfahren nach Anspruch 14, bei dem jedes Benutzerterminal (2, 3, 4) auf jeden empfangenen zweiten offenen Datensatz (10), welcher Identitätsinformation (17) eines Benutzerterminals (2, 3, 4) enthält, das nicht mit dem empfangenden Benutzerterminal (2, 3, 4) identisch ist, eine erste Nachricht (5) an das Zentralterminal (1) sendet, welche einen ersten vertraulichen Datensatz (6) enthält, der mit einem ersten Schlüssel (12, 13, 14) verschlüsselt ist, der zu einem Paar von Schlüsseln (11, 12, 13, 14, 15, 16) gehört, über welches das Benutzerterminal (2, 3, 4), dessen Identitätsinformation (17) in dem zweiten offenen Datensatz (10) enthalten ist, und das die erste Nachricht (5) sendende Benutzerterminal (2, 3, 4) verfügen.

16. Computerprogrammprodukt umfassend ein Zentralmodul von ersten Befehlen und ein Benutzermodul von zweiten Befehlen, wobei ein erster Computer bei Ausführung der ersten Befehle und zumindest ein zweiter Computer bei Ausführung der zweiten Befehle ein Verfahren gemäß einem der Ansprüche 12 bis 15 ausführen, bei welchem Verfahren der erste Computer das Zentralterminal (1) und jeder des zumindest einen zweiten Computers das Benutzerterminal (2, 3, 4) darstellen.

17. Kombination umfassend zumindest einen computerlesbaren Datenträger, auf welcher Kombination das Computerprogrammprodukt gemäß Anspruch 16 gespeichert ist.
